# EUROPÄISCHE PATENTSCHRIFT

(11) **EP 1 450 082 B1**
(45) Veröffentlichungstag und Bekanntmachung des Hinweises auf die Patenterteilung: **09.08.2006**
(21) Anmeldenummer: 04002128.9
(22) Anmeldetag: 31.01.2004
(51) Int. Cl.: F16K 1/38, G05D 16/10

(54) **Druckbegrenzungsventil**
Pressure limiting valve
Soupape de limitation de pression

(30) Priorität: 19.02.2003 DE 10306927
(43) Veröffentlichungstag der Anmeldung: 25.08.2004
(73) Patentinhaber: Hammelmann Maschinenfabrik GmbH, 59302 Oelde (DE)
(72) Erfinder: Stoffers, Christian, 33378 Rheda-Wiedenbrück (DE)
(74) Vertreter: Dantz, Jan Henning

(56) Entgegenhaltungen:
- EP-A- 0 475 754
- DE-A1- 4 325 097
- DE-B- 1 203 991
- DE-U- 7 731 626
- GB-A- 1 037 696
- US-A- 3 604 446
- US-A- 4 009 860
- US-A- 4 349 154

## Beschreibung

Die vorliegende Erfindung betrifft ein Druckbegrenzungsventil gemäß dem Oberbegriff des Anspruchs 1.

Derartige Druckbegrenzungsventile finden vorzugsweise in Hochdruckaggregaten Verwendung, wie Hochdruck-Spritzpistolen oder dergleichen, bei denen das Medium, vorzugsweise Wasser oder ein vergleichbares Medium unter einem Systemdruck bspw. > 1000 bar steht.

Dabei werden Druckbegrenzungsventile eingesetzt, die sowohl ohne wie auch mit einem Vorsteuerventil ausgestattet sind. In jedem Fall ist zur Druckbegrenzung ein Kraftspeicher vorgesehen, der mittelbar oder unmittelbar auf den Ventilkörper einen vorbestimmten Druck ausübt.

Insbesondere die genannten hohen Systemdrücke stellen jedoch besondere Anforderungen an Dichtungen und ähnliche Verschleißteile, die nicht nur die Herstellungskosten eines Druckbegrenzungsventils ungünstig beeinflussen, sondern auch dessen Standzeit.

Die bekannten Vorsteuerventile sind so konzipiert, daß der Steuerdruck, der am Ventilkörper anliegt, über separate Drosseln oder Düsen erzeugt wird, durch die unter Druckreduzierung Medium aus dem Eingangskanal in Steuerleitungen geführt wird, die zum einen auf den Ventilkörper einwirken und zum anderen auf eine Steuereinheit mit einem beispielsweise Vorsteuerkegel, auf den durch den Kraftspeicher Druck ausgeübt wird.

Dabei kann der Kraftspeicher beispielsweise aus einem Pneumatikzylinder bestehen, dessen Luftdruck einstellbar ist.

Denkbar ist aber auch, als Kraftspeicher einen Elektromagneten vorzusehen oder eine Druckfeder, die ebenfalls in ihrer Kraftwirkung einstellbar sind.

Die Einbringung von Steuerleitungen sowie diverser separater Drosseln bzw. Düsen in das Ventilgehäuse wie auch dem diesen vorgeschalteten Vorsteuerventil ist mit einem erheblichen Fertigungsaufwand mit der Folge hoher Herstellungskosten verbunden.

Darüber hinaus sind die bekannten Druckbegrenzungsventile nicht geeignet, bei mehreren parallelen Anschlüssen an eine Medienquelle unabhängig von der Anzahl der ein- oder abgeschalteten Verbraucher, an den jeweils eingeschalteten Verbrauchern einen konstanten Ausgangsdruck zu gewährleisten. Naturgemäß führt dies in der Praxis vielfach zu einem unbefriedigenden Arbeitsergebnis.

Ein Überdruckventil ist aus der DE 12 03 991 B bekannt. Dieses Überdruckventil weist einen Steuerkolben auf, der in einer Bohrung gleitend geführt ist, wobei zur Funktionsfähigkeit eine dichtende Anlage an der Wandung der Bohrung unabdingbar ist. Zur Entlüfung ist eine Entlüftungsnut in Form einer axialen Ausnehmung im Steuerkolben vorgesehen, die nach einem vollständigen Entweichen der Luft bzw. eines Öl-Luftgemisches durch Aufbau des vollständigen Drucks geschlossen wird.

Der vorliegenden Erfindung liegt daher die Aufgabe zugrunde, ein Druckregelventil der gattungsgemäßen Art so weiter zu entwickeln, daß es konstruktiv einfach aufgebaut und kostengünstiger herstell- und betreibbar ist und seine Verwendungsfähigkeit verbessert wird.

Diese Aufgabe wird durch ein Druckbegrenzungsventil gelöst, das die Merkmale des Anspruchs 1 aufweist.

Durch diese konstruktive Ausbildung kann auf den Einsatz von am Ventilkörper bzw. Kolben einerseits und dem Ventilgehäuse andererseits anliegenden und daher verschleißenden Dichtungen verzichtet werden, da die Baueinheit Ventilkörper/Kolben sozusagen schwimmend ohne Berührung gegenüber dem Ventilgehäuse gelagert ist und der Drosselspalt nur eine geringe Menge des Mediums durchläßt, das im einfachsten Fall über eine Leckagebohrung an dem dem Ventilkörper gegenüber liegenden Ende abgeführt wird.

Vorzugsweise ist der Kolben vollumfänglich durch einen Dichtring umschlossen, der fest in dem Ventilkörper einliegt und dessen Innenwandung ebenso wie der Mantel des Kolbens eine Begrenzung für den Drosselspalt bildet.

Dieser Dichtring ist nach einer vorteilhaften Weiterbildung der Erfindung aus einem verschleißfesten Material hergestellt, vorzugsweise einem Hartmetall, ebenso wie der Kolben.

Der Ventilkörper ist zu seinem freien Ende sich verjüngend konisch ausgebildet und in einem Ventilsitz zentriert.

Abhängig vom Systemdruck des Mediums einerseits und vom über den Kolben aufgebrachten Druck der Steuereinheit bildet sich zwischen dem Ventilsitz und dem Ventilkörper ein Spalt, durch den das Medium zum Ausgangskanal strömt.

Je nach eingestelltem Steuerdruck ergibt sich bei gleichem Systemdruck ein mehr oder weniger großer Spalt zwischen dem Ventilkörper und dem Ventilsitz, mit entsprechender Änderung des Ausströmdrucks.

Besondere Vorteile ergeben sich durch die Erfindung bei einem Druckbegrenzungsventil, das mit einem Vorsteuerventil versehen ist, wobei der Vorsteuerdruck sich durch den Drosselspalt zwischen dem Dichtungsring und dem Kolben ergibt.

Auf Steuerleitungen, einschließlich entsprechender Drosseln oder Düsen, die wie im Stand der Technik im Ventilgehäuse vorgesehen sind, kann verzichtet werden, wodurch sich eine sehr einfache und kostengünstige Herstellung ergibt.

Darüber hinaus führt die Erfindung dazu, daß bei Betrieb von mehreren angeschlossenen Verbrauchern an eine gemeinsame Systemdruckquelle, unabhängig davon, wieviel Verbraucher in Betrieb bzw. abgeschaltet sind, ein stets konstanter Druck des Mediums am Ausgangskanal jeden Verbrauchers besteht.

Nach einer weiteren vorteilhaften Ausbildung der Erfindung ist vorgesehen, den Eingangskanal seitlich in eine Druckkammer münden zu lassen, die zur einen Seite hin übergeht zum Ventilsitz bzw. zu dem mit dem Ventilkörper gebildeten Spalt und zur anderen Seite zum Drosselspalt. Durch diese konstruktive Ausbildung kann auf eine separate Drossel zur Erzeugung des Steuerdrucks verzichtet werden.

Weitere vorteilhafte Ausbildungen sind in den Unteransprüchen gekennzeichnet.

Ausführungsbeispiele der Erfindung werden nachfolgend anhand der beigefügten Zeichnungen beschrieben.

Es zeigen:
- Figur 1: ein Ausführungsbeispiel der Erfindung in einer geschnittenen Seitenansicht,
- Figur 2: ein weiteres Ausführungsbeispiel der Erfindung, ebenfalls als geschnittene Seitenansicht dargestellt.

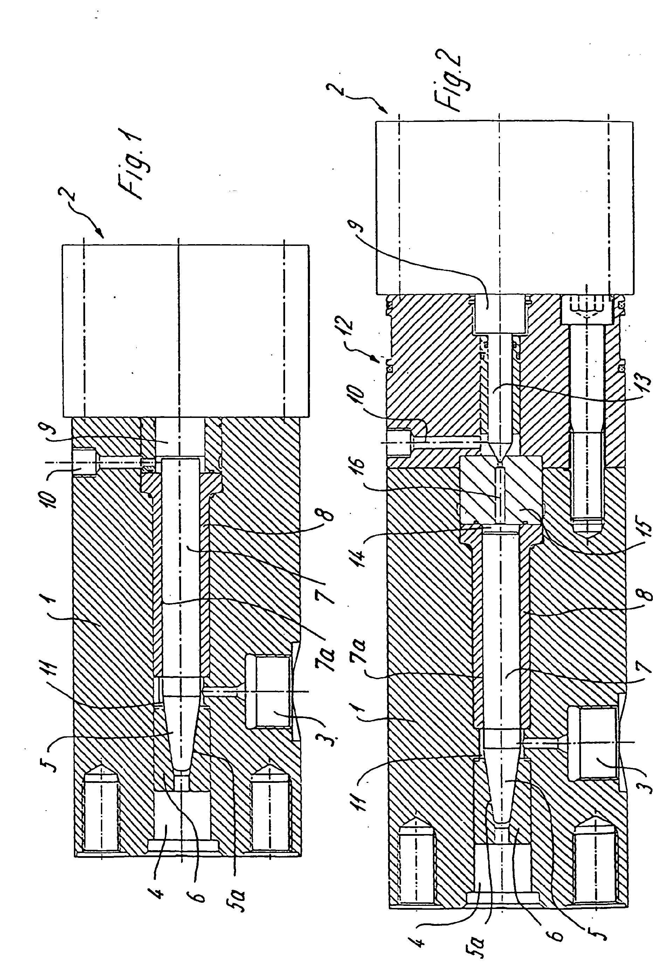

In der Figur 1 ist ein Druckbegrenzungsventil dargestellt, das ein Ventilgehäuse darstellt, das ein Ventilgehäuse 1 aufweist, an das ein Kraftspeicher 2, beispielsweise in Form eines Pneumatikzylinders, angeflanscht ist.

In dem Ventilgehäuse 1 ist ein Ventilkörper 5 vorgesehen, der zusammen mit einem Kolben 7 eine Baueinheit bildet, die wiederum auf der dem Ventilkörper 5 gegenüber liegenden Stirnseite durch einen Kolben 9 des Kraftspeichers 2 mit einem vorbestimmten Druck beaufschlagt wird.

Der Ventilkörper 5 ist konisch ausgebildet und liegt zentriert in einem Ventilsitz 6, im Betriebsfall berührungslos unter Bildung eines Spaltes 5a ein, wobei die Aufnahme des Ventilsitzes 6 für den Ventilkörper 5 an dessen Neigung und Kontur angepaßt ist.

Seitlich in das Ventilgehäuse 1, also quer zur Baueinheit Ventilkörper 5/Kolben 7 ist ein Eingangskanal 3 eingebracht, durch den ein unter Systemdruck stehendes fluides Medium, vorzugsweise Wasser, zuführbar ist, wobei der Eingangskanal 3 in eine Druckkammer 11 mündet.

Der Kolben 7 ist mit geringem Spiel in einer feststehenden Dichtungshülse 8 axial verschiebbar gelagert, wobei durch das Spiel ein Drosselspalt 7a gebildet ist, der durch die Innenfläche der Dichtungshülse 8 und die Mantelfläche des Kolbens 7 begrenzt ist.

Die Druckkammer 11 ist im Übergangsbereich zwischen dem. Ventilkörper 5 und dem Kolben 7 angeordnet, so daß sowohl der Spalt 5a wie auch der Drosselspalt 7a damit in Verbindung stehen.

Das bei Betrieb durch den Drosselspalt 7a unter Druckreduzierung in geringer Menge austretende Medium wird über eine Leckagebohrung 10 abgeleitet, wobei die Menge abhängig ist vom Systemdruck.

Bei dem in der Figur 2 gezeigten Ausführungsbeispiel weist das Druckbegrenzungsventil zusätzlich ein Vorsteuerventil 12 auf, das zwischen dem Kraftspeicher 2 und dem Ventilgehäuse 1 angeordnet ist.

Zu diesem Vorsteuerventil 12 gehört ein Aufnahmeteil 15, das im Ventilgehäuse 1 gelagert ist und das eine Begrenzungsfläche für einen Druckraum 14 bildet, der andererseits durch die Stirnfläche des Kolbens 7 und seitlich durch die Innenwandung der Dichtungshülse 8 begrenzt ist. Konzentrisch zum Kolben 7 erstreckt sich in dem Aufnahmeteil 15 eine Bohrung 16 vom Druckraum 14 ausgehend, die am gegenüber liegenden Ende durch einen mit dem Druckkolben 9 verbundenen Steuerkegel 13 verschlossen ist, wobei der Verschlußdruck durch den einstellbaren Druck des Kraftspeichers 2 bestimmt ist.

Durch das durch den Drosselspalt 7a geführte Medium wird in der Druckkammer 14 ein Steuerdruck aufgebaut, der über die Bohrung 16 auch am Steuerkegel 13 anliegt.

Erhöht sich aufgrund der Zunahme des Systemdrucks bspw. durch Abschalten einiger von vielen, parallel geschalteter Verbraucher durch das durch den Drosselspalt 7a geführte Medium der Vorsteuerdruck im Druckraum 14, wird gegen den Einstelldruck des Kraftspeichers 2 der Steuerkegel 13 verschoben, so daß die Bohrung 16 frei liegt und ein entsprechendes Volumen austritt und durch die Leckagebohrung abgeführt wird. Der die Breite des Spaltes 5a und somit den Druck des Mediums bestimmende Steuerdruck, der auf dem Kolben 7 liegt, bleibt somit immer gleich, unabhängig davon, wieviel an die Mediumquelle mit Systemdruck angeschlossene Verbraucher zu- oder abgeschaltet sind.

### Bezugszeichenliste

- 1: Ventilgehäuse
- 2: Kraftspeicher
- 3: Eingangskanal
- 4: Auslaßkanal
- 5: Ventilkörper
- 5a: Spalt
- 6: Ventilsitz
- 7: Kolben
- 7a: Drosselspalt
- 8: Dichtungshülse
- 9: Druckkolben
- 10: Leckagebohrung
- 11: Druckkammer
- 12: Vorsteuerventil
- 13: Steuerkegel
- 14: Druckraum
- 15: Aufnahmeteil
- 16: Bohrung

## Patentansprüche

1. An eine gemeinsame, unter Systemdruck stehende Quelle eines fluiden Mediums mehrerer Verbraucher anschließbares Druckbegrenzungsventil, mit einem Ventilgehäuse (1), in dem ein Eingangskanal (3) und ein damit in Verbindung stehender Ausgangskanal (4) für das Medium vorgesehen sind, wobei der Mediumdurchfluss durch einen axial bewegbaren, mit einem Kraftspeicher (2) in Wirkverbindung stehenden Ventilkörper (5) im Zusammenspiel mit einem Ventilsitz (6) regelbar ist, wobei sich an den Ventilkörper (5) koaxial ein über den Kraftspeicher (2) direkt oder indirekt mit Druck beaufschlagbarer, im Ventilgehäuse (1) gelagerter Kolben (7) anschließt, **dadurch gekennzeichnet, dass** die Mantelfläche des Kolbens (7) einerseits und die benachbarte Wandung des Ventilgehäuses (1) andererseits unter Ausbildung einer schwimmenden Lagerung einen Drosselspalt (7a) begrenzt, der mit dem Eingangskanal (3) in Verbindung steht.

2. Druckbegrenzungsventil nach Anspruch 1, bei dem zwischen dem Ventilgehäuse (1) und dem Kraftspeicher (2) ein Vorsteuerventil (12) angeordnet ist, **dadurch gekennzeichnet, daß** das Vorsteuerventil (12) auf der dem Ventilkörper (5) abgewandten Seite des Kolbens (7) einen Druckraum (14) aufweist, in den der Drosselspalt (7a)mündet und der neben der Stirnfläche des Kolbens (7) durch ein gegenüber liegendes Aufnahmeteil (15) und seitlich durch die Innenwandung der Dichtungshülse (8) begrenzt ist.

3. Druckbegrenzungsventil nach Anspruch 1 oder 2, **dadurch gekennzeichnet, daß** im Übergangsbereich zwischen dem Ventilkörper (5) und dem Kolben (7) eine Druckkammer (11) vorgesehen ist, in die der Eingangskanal (3) mündet.

4. Druckbegrenzungsventil nach Anspruch 1 oder 2, **dadurch gekennzeichnet, daß** der Eingangskanal (3) quer zur Längsachse der Baueinheit Ventilkörper (5)/Kolben (7) angeordnet ist.

5. Druckbegrenzungsventil nach Anspruch 1, **dadurch gekennzeichnet, daß** der Ventilkörper (5) in Betriebsstellung unter Bildung eines Spaltes (5a) in einem Ventilsitz (6) zentriert angeordnet ist.

6. Druckbegrenzungsventil nach Anspruch 1, **dadurch gekennzeichnet, daß** der Ventilkörper (5) zu seiner dem Kolben (7) abgewandten Seite hin sich verjüngend ausgebildet ist.

7. Druckbegrenzungsventil nach Anspruch 1, **dadurch gekennzeichnet, daß** der Kolben (7) mantelseitig von einer feststehenden Dichtungshülse (8) umschlossen ist.

8. Druckbegrenzungsventil nach Anspruch 7, **dadurch gekennzeichnet, daß** der Kolben (7) und die Dichtungshülse (8) aus einem verschleißfesten Material, vorzugsweise aus Hartmetall, gebildet sind.

9. Druckbegrenzungsventil nach Anspruch 1, **dadurch gekennzeichnet, daß** zur Abführung des durch den Drosselspalt (7a) geführten Mediums im Ventilgehäuse (1) eine Leckagebohrung (10) vorgesehen ist.

10. Druckbegrenzungsventil nach Anspruch 2, **dadurch gekennzeichnet, daß** in dem Aufnahmeteil (15) eine mit dem Druckraum (14) in Verbindung stehende Bohrung (16) angeordnet ist, die andererseits durch einen Steuerkegel (13), der mit dem Kraftspeicher (2) verbunden ist, verschließbar ist.

11. Druckbegrenzungsventil nach einem der Ansprüche 9 oder 10, **dadurch gekennzeichnet, daß** die Leckagebohrung (10) in dem dem Anlagebereich des Steuerkegels (13) am Aufnahmeteil (15) benachbarten Bereich angeordnet ist.

## Claims

1. Pressure-limiting valve which can be connected to a common source, subjected to system pressure, of a fluid medium from a number of consuming units, having a valve housing (1) in which are provided an inlet channel (3) and an outlet channel (4), connected to the inlet channel, for the medium, it being possible to regulate the medium throughflow by way of an axially moveable valve body (5), which is in operative connection with an energy store (2), in conjunction with a valve seat (6), the valve body (5) being adjoined coaxially by a piston (7) which is mounted in the valve housing (1) and can be subjected to pressure directly or indirectly via the energy store (2), **characterized in that** the lateral surface of the piston (7), on the one hand, and the adjacent wall of the valve housing (1), on the other hand, bound a throttle gap (7a), which is connected to the inlet channel (3), with a floating mounting arrangement being formed in the process.

2. Pressure-limiting valve according to Claim 1 with a pilot valve (12) arranged between the valve housing (1) and the energy store (2), **characterized in that**, on that side of the piston (7) which is directed away from the valve body (5), the pilot valve (12) has a pressure space (14) into which the throttle gap (7a) opens and which is bounded, alongside the end surface of the piston (7), by an accommodating part (15) located opposite and, laterally, by the inner wall of the sealing sleeve (8).

3. Pressure-limiting valve according to Claim 1 or 2, **characterized in that** a pressure chamber (11), into which the inlet channel (3) opens, is provided in the transition region between the valve body (5) and the piston (7).

4. Pressure-limiting valve according to Claim 1 or 2, **characterized in that** the inlet channel (3) is arranged transversely to the longitudinal axis of the structural unit comprising the valve body (5) and piston (7).

5. Pressure-limiting valve according to Claim 1, **characterized in that** the valve body (5), in the operating position, is arranged in a centred manner in a valve seat (6), with a gap (5a) being formed in the process.

6. Pressure-limiting valve according to Claim 1, **characterized in that** the valve body (5) is designed to taper in the direction of its side which is directed away from the piston (7).

7. Pressure-limiting valve according to Claim 1, **characterized in that** the piston (7) is enclosed laterally by a fixed sealing sleeve (8).

8. Pressure-limiting valve according to Claim 7, **characterized in that** the piston (7) and the sealing sleeve (8) are formed from a wear-resistant material, preferably from hard metal.

9. Pressure-limiting valve according to Claim 1, **characterized in that** a leakage bore (10) is provided in the valve housing (1) in order to discharge the medium which is channelled through the throttle gap (7a).

10. Pressure-limiting valve according to Claim 2, **characterized in that** the accommodating part (15) contains a bore (16) which is connected to the pressure space (14) and, at the other end, can be closed by a control cone (13), which is connected to the energy store (2).

11. Pressure-limiting valve according to either of Claims 9 and 10, **characterized in that** the leakage bore (10) is arranged in the region adjacent to the region in which the control cone (13) butts against the accommodating part (15).

## Revendications

1. Soupape de limitation de pression, apte à être raccordée à une source commune sous pression d'un fluide pour plusieurs consommateurs, comportant une cage de soupape (1) dans laquelle sont prévus un canal d'admission (3) du fluide et un canal de sortie (4) du fluide communiquant avec ce dernier, la circulation du fluide pouvant être réglée par un corps de soupape (5), qui est mobile axialement et en liaison active avec un accumulateur de force (2), en coopération avec un siège de soupape (6), un piston (7), qui est monté dans la cage de soupape (1) et peut être sollicité en pression directement ou indirectement par l'intermédiaire de l'accumulateur de force (2), étant raccordé coaxialement au corps de soupape (5), **caractérisée en ce que** la paroi latérale du piston (7), d'une part, et la paroi adjacente de la cage de soupape (1), d'autre part, délimitent, moyennant la réalisation d'un support flottant, une fente d'étranglement (7a) qui communique avec le canal d'admission (3).

2. Soupape de limitation de pression selon la revendication 1, dans laquelle une soupape pilote (12) est montée entre la cage de soupape (1) et l'accumulateur de force (2), **caractérisée en ce que** la soupape pilote (12), sur le côté du piston (7) opposé au corps de soupape (5), comporte une chambre de pression (14), dans laquelle débouche la fente d'étranglement (7a) et laquelle, outre la face frontale du piston (7), est délimitée par une partie de réception (15) située en face et, latéralement, par la paroi intérieure de la gaine d'étanchéité (8).

3. Soupape de limitation de pression selon la revendication 1 ou 2, **caractérisée en ce que**, dans la zone de transition entre le corps de soupape (5) et le piston (7), il est prévu une chambre de pression (11) dans laquelle débouche le canal d'admission (3).

4. Soupape de limitation de pression selon la revendication 1 ou 2, **caractérisée en ce que** le canal d'admission (3) est agencé perpendiculairement à l'axe longitudinal de l'unité formée par le corps de soupape (5) et le piston (7).

5. Soupape de limitation de pression selon la revendication 1, **caractérisée en ce que** le corps de soupape (5), dans la position de service, est centré dans un siège de soupape (6) en formant une fente (5a).

6. Soupape de limitation de pression selon la revendication 1, **caractérisée en ce que** le corps de soupape (5) est réalisé en se rétrécissant vers son côté opposé au piston (7).

7. Soupape de limitation de pression selon la revendication 1, **caractérisée en ce que** le piston (7) est entouré autour de sa paroi latérale par une gaine d'étanchéité (8) fixe.

8. Soupape de limitation de pression selon la revendication 7, **caractérisée en ce que** le piston (7) et la gaine d'étanchéité (8) sont réalisés dans un matériau résistant à l'usure, tel qu'un carbure métallique.

9. Soupape de limitation de pression selon la revendication 1, **caractérisée en ce que** dans la cage de soupape (1), il est prévu une forure de sortie (10) pour l'évacuation du fluide guidé à travers la fente d'étranglement (7a).

10. Soupape de limitation de pression selon la revendication 2, **caractérisée en ce que** dans la partie de réception (15) est réalisée une forure (16) qui communique avec la chambre de pression (14) et qui, de l'autre côté, peut être fermée par un cône de commande (13) qui est relié à l'accumulateur de force (2).

11. Soupape de limitation de pression selon la revendication 9 ou 10, **caractérisée en ce que** la forure de sortie (10) est réalisée dans la zone adjacente à la zone d'appui du cône de commande (13) sur la partie de réception (15). ..
